# EUROPÄISCHE PATENTSCHRIFT

(11) **EP 1 165 975 B1**
(45) Veröffentlichungstag und Bekanntmachung des Hinweises auf die Patenterteilung: **03.12.2003**
(21) Anmeldenummer: 00920405.8
(22) Anmeldetag: 17.03.2000
(51) Int. Cl.: F16B 37/14

(54) **SCHUTZKAPPE**
PROTECTING CAP
CAPUCHON DE PROTECTION

(30) Priorität: 01.04.1999 DE 29906012 U
(43) Veröffentlichungstag der Anmeldung: 02.01.2002
(73) Patentinhaber: Heintges, Sebastian, 56567 Neuwied (DE); Schmitz, Lothar, 56567 Neuwied (DE)
(72) Erfinder: Heintges, Sebastian, 56567 Neuwied (DE); Schmitz, Lothar, 56567 Neuwied (DE)
(74) Vertreter: Brandenburg, Thomas, Dr.
(86) Internationale Anmeldenummer: DE0000880
(87) Internationale Veröffentlichungsnummer: WO00060246

(56) Entgegenhaltungen:
- DE-A- 2 836 056
- DE-B- 1 137 098
- DE-U- 29 906 012
- FR-A- 2 086 693
- US-A- 4 784 555
- US-A- 5 707 113
- US-A- 5 988 966

## Beschreibung

Die Erfindung betrifft eine Schutzkappe für den Kopf einer in ein Konstruktionsteil eingeschraubten Schraube.

Schutzkappen für Schraubenköpfe sind in zahlreichen Ausführungsformen bekannt. Sie sind meistens als Kunststoff-Spritzgußteile ausgebildet, die aufgrund ihrer Eigenverformbarkeit auf dem Schraubenkopf sitzen können und diesen gegen Verschmutzung, Korrosion und mechanische Beschädigung schützen. Nachteilig bei den bekannten Schutzkappen ist, daß sie auf Dauer keinen festen Sitz haben, sondern sich durch Alterung des Kappenmaterials leicht lockern, insbesondere unter dem Einfluß von Schwingungen oder anderen mechanischen Einwirkungen.

Die US-A-5,707,113 betrifft Schutz- und Befestigungskappen für die Befestigung einer Radkappe. Die Schutzkappen werden auf die überstehenden Gewindebolzen der mit Schrauben befestigten Räder aufgesteckt. In einer bevorzugten Ausführungsform umfaßt die aus Kunststoff geformte Schutzkappe einen inneren Metallklipp, der nach dem Aufstecken sich im Eingriff mit dem Gewinde befindet.

Die FR-A-2 086 693 betrifft eine Abdeckplatte für eine Schraube, bei der ein Unterteil mittels der abzudeckenden Schraube auf dem Substrat fixiert wird. Anschließend wird eine Kappe aufgesetzt und durch das Unterteil gehalten. Das Unterteil ist nicht zwischen den Seitenflächen des Schraubenkopfes und der Innenseite des Mantels der Schutzkappe angeordnet, sondern wird durch die Klemmwirkung der Schraube mit dem Substrat gehalten.

Die DE 1 137 098 betrifft Verkleidungselemente für die Abdeckung elektrischer Installationsgeräte. Das Dokument offenbart eine Halteeinrichtung, umfassend umgreifende federnde Teile, die von Befestigungsschrauben auf dem Substrat gehalten werden und in die sich im mittleren Teil verengenden Zapfen eingesteckt werden. Die umgreifenden federnden Teile sind nicht zwischen der Seitenfläche des Schraubenkopfes und der Innenseite des Mantels der Schutzkappe angeordnet.

Die US-A-4,784,555 betrifft eine Abdeckplatte für Schrauben und Bolzen, wobei auf der Innenseite der Kappe ein O-Ring angeordnet ist. Der innere Durchmesser des O-Ringes ist geringer als der äußere Durchmesser des Bolzens. Um eine kraftschlüssige Verbindung zwischen der Kappe und dem O-Ring zu bewirken, ist auf der Innenseite der Kappe eine Nut eingefügt, in die der O-Ring eingreift.

Der vorliegenden Erfindung liegt die Aufgabe zugrunde, eine Schutzkappe für den Kopf einer Schraube zu schaffen, die durch einen festen Klemmsitz auf dem Schraubenkopf gehalten wird. Darüber hinaus soll eine Schutzkappe geschaffen werden, die auch bei erhöhten Temperaturen ihren sicheren Sitz beibehält. Weitere Vorteile der erfindungsgemäßen Schutzkappe ergeben sich aus der folgenden Beschreibung.

Diese Aufgabe wird bei der eingangs genannten Schutzkappe erfindungsgemäß dadurch gelöst, daß zwischen der Schutzkappe und dem Schraubenkopf ein Körper angeordnet ist, der zwischen beiden eine kraft- oder formschlüssige Verbindung herstellt. Zur Erfüllung seiner Funktion hat der Körper im allgemeinen eine ausreichende Elastizität, um die Kappe auf dem Schraubenkopf zu halten. Die Form des Schraubenkopfes und der Schutzkappe kann unterschiedlich sein, so daß der die Verbindung herstellende Körper entsprechend angepaßt sein muß. Der Schraubenkopf kann insbesondere zylindrisch oder sechseckig-prismatisch sein. Die Verbindung ist im allgemeinen derart, daß die Schutzkappe von Hand aufgesteckt und wieder abgezogen werden kann, jedoch sich nicht unter den Betriebsbedingungen von selbst lösen kann.

Nach einer bevorzugten Ausführungsform der erfindungsgemäßen Schutzkappe ist derKörper als Ring oder Kappe aus einem elastischen Werkstoff zwischen der Seitenfläche des Schraubenkopfes und der Innenseite des Mantels der Schutzkappe angeordnet. Der Ring bzw. die Kappe kann aus Gummi oder einem elastomeren Kunststoff bestehen. Dieser Körper kann in der Schutzkappe bei deren Fertigung dauerhaft befestigt werden, so daß er nicht getrennt von dieser auf den Schraubenkopf aufgebracht werden muß. Der elastische Ring erfährt beim Aufsetzen der Schutzkappe eine Klemmung und liefert dadurch eine sichere Verbindung zwischen Kappe und Schraubenkopf. Wenn der Körper thermisch belastbar ist, z.B. bis 220°C, wird die Schutzkappe auch bei erhöhten Dauertemperaturen sicher gehalten.

Bei einer speziellen Ausführungsform der Schutzkappe für einen Schraubenkopf in einer Flachsenkung ist die Schutzkappe für einen bündigen und im wesentlichen spaltfreien Verschluß der Senkung dimensioniert. Der Außendurchmesser der Schutzkappe entspricht dabei dem Innendurchmesser der Flachsenkung, und die Höhe der Schutzkappe der Tiefe der Flachsenkung. Durch die Schutzkappe wird nicht nur der Schraubenkopf geschützt, sondern auch die Senkung vollständig ausgefüllt und damit ein ansprechendes bzw. kaum sichtbares Erscheinungsbild der Verschraubungen geschaffen.

Die genannten Ausführungsformen der erfindungsgemäßen Schutzkappe werden nachfolgend an Hand der Zeichnung näher beschrieben. Es zeigen
Figur 1 eine Schraube in einem Konstruktionsteil mit einer ersten Ausführungsform der erfindungsgemäßen Schutzkappe;
Figur 2 eine Ausführungsform der Schutzkappe wie in Figur 1, jedoch für einen Schraubenkopf in einer Flachsenkung;

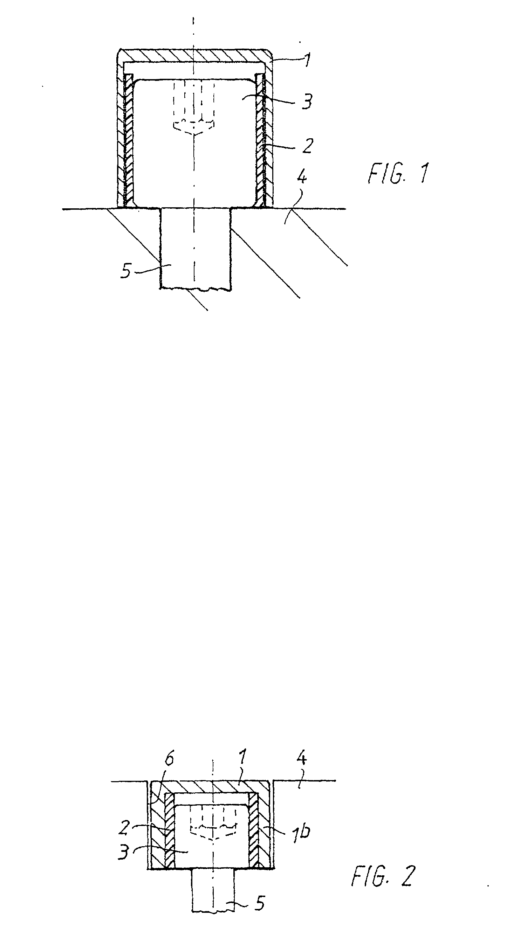

Figur 1 zeigt eine Schraube, deren Schaft 5 in ein Konstruktionsteil 4 eingeschraubt ist. Auf den Schraubenkopf 3 ist eine Kappe aufgesetzt, wobei zwischen ihrem Mantel und der Seitenfläche des Schraubenkopfes 3 ein elastischer Ringkörper 2 angeordnet ist, der zwischen den Teilen 1 und 3 gepresst ist und so die Schutzkappe auf dem Schraubenkopf hält. Die Ausführungsform nach Figur 2 unterscheidet sich von der nach Figur 1 nur dadurch, daß sich der Schraubenkopf 3 in einer Flachsenkung 6 befindet und die Schutzkappe 1 so dimensioniert ist, daß sie nach dem Aufsetzen auf den Schraubenkopf 3 mit der ebenen Außenseite des Konstruktionsteils 4 bündig abschließt.

Die erfindungsgemäße Schutzkappe ist in mehrfacher Hinsicht vorteilhaft. Sie schützt den Schraubenkopf 3 vor Stößen, Verschmutzung oder Korrosion, die auftreten kann, wenn die Oberfläche des Schraubenkopfes eine Schutzschicht aufweist, die beim Festziehen der Schraube beschädigt wurde. Die Schutzkappe ist mehrfach verwendbar und im allgemeinen ohne ein Werkzeug lösbar. Die Verletzungsgefahr durch den vorstehenden Schraubenkopf wird erheblich verringert. Die Schutzkappe der Figuren 1 bis 2 läßt sich auch bei fertigen Schraubverbindungen nachträglich leicht montieren. Die Schutzkappe besteht vorzugsweise aus Metall.

## Patentansprüche

1. Schutzkappe für den Kopf einer in ein Konstruktionsteil eingeschraubten Schraube, wobei zwischen der Schutzkappe (1) und dem Schraubenkopf (3) ein Körper (2) angeordnet ist, der zwischen beiden eine kraft- oder formschlüssige Verbindung herstellt, **dadurch gekennzeichnet, daß** der Körper (2) als Ring der im Wesentlichen die gesamte seitliche innere Oberfläche der Schutzkappe bedeckt oder als Kappe aus einem elastischen Werkstoff zwischen der Seitenfläche des Schraubenkopfes (3) und der Innenseite des Mantels der Schutzkappe (1) angeordnet ist und wobei die seitliche innere Oberfläche der Schutzkappe (1) glatt ausgebildet ist.

2. Schutzkappe nach Anspruch 1 für einen Schraubenkopf (3) in einer Flachsenkung (6), **dadurch gekennzeichnet, daß** die Schutzkappe (1) für einen bündigen und im Wesentlichen spaltfreien Verschluß der Senkung (6) dimensioniert ist.

3. Schutzkappe nach Anspruch 1 oder 2, **dadurch gekennzeichnet, daß** der Körper (2) aus Gummi und/oder einem elastischen Kunststoff besteht.

4. Schutzkappe nach Anspruch 3, **dadurch gekennzeichnet, daß** das Material des Körpers (2) bis 220 °C thermisch belastbar ist.

5. Schutzkappe nach einem der vorherigen Ansprüche, **dadurch gekennzeichnet, daß** sie aus Metall ist.

## Claims

1. Protecting cap for the head of a screw that is screwed into a constructional part, wherein a body (2) is arranged between the protecting cap (I) and the screw head (3) which produces a positive or non-positive fit between the protecting cap and the screw head, **characterized by** the fact that the body (2) is realized in the form of a ring that essentially covers the entire inner lateral surface of the protecting cap or in the form of a cap consisting of an elastic material which is arranged between the lateral surface of the screw head (3) and the inner side of the surface area of the protecting cap (I), and by fact that the inner lateral surface of the protecting cap (I) is realized in a smooth fashion.

2. Protecting cap according to claim I for a screw head (3) situated in a flat sink (6), **characterized by** the fact that the protecting cap (I) has such dimensions that the sink (6) can be sealed in a flush and essentially gap-free fashion.

3. Protecting cap according to claim I or 2, **characterized by** the fact that the body (2) consists of rubber and/or an elastic material.

4. Protecting cap according to claim 3, **characterized by** the fact that the material of the body (2) can be subjected to a thermal load of up to 220 °C.

5. Protecting cap according to one of the preceding claims, **characterized by** the fact that it consists of metal.

## Revendications

1. Capuchon de protection pour la tête d'une vis vissée dans un élément de construction, un corps (2) étant disposé entre le capuchon de protection (1) et la tête de vis (3), établissant une liaison par complémentarité de force ou de forme entre ceux-ci, **caractérisé en ce que** le corps (2) est disposé entre la face latérale de la tête de vis (3) et la face intérieure de l'enveloppe du capuchon de protection (1), sous la forme d'un anneau recouvrant pour l'essentiel la totalité de la surface intérieure latérale du capuchon de protection (1) ou sous la forme d'un capuchon en matériau élastique, la surface intérieure latérale du capuchon de protection (1) étant lisse.

2. Capuchon de protection selon la revendication 1 pour une tête de vis (3) dans un lamage (6), **caractérisé en ce que** le capuchon de protection (1) est dimensionné pour une fermeture affleurante et pour l'essentiel sans interstice du lamage (6).

3. Capuchon de protection selon la revendication 1 ou 2, **caractérisé en ce que** le corps (2) est en caoutchouc et/ou en une matière plastique élastique.

4. Capuchon de protection selon la revendication 3, **caractérisé en ce que** le matériau du corps (2) peut être thermiquement sollicité jusqu'à 220°C.

5. Capuchon de protection selon l'une quelconque des revendications précédentes, **caractérisé en ce qu'**il est en métal.
